(19) Europäisches Patentamt / European Patent Office / Office européen des brevets

(11) **EP 4 745 534 A1**

(12) **EUROPEAN PATENT APPLICATION**

(43) Date of publication:
**20.05.2026 Bulletin 2026/21**

(21) Application number: **25216929.7**

(22) Date of filing: **19.11.2025**

(51) International Patent Classification (IPC):
**G01F 1/66** (2022.01)    **G01F 1/667** (2022.01)
**G01N 29/22** (2006.01)    **G01N 29/24** (2006.01)
**G01F 25/10** (2022.01)    **G01F 1/74** (2006.01)
**G01F 15/00** (2006.01)    **G01F 15/02** (2006.01)

(52) Cooperative Patent Classification (CPC):
**G01F 1/662; G01F 1/667; G01F 1/668; G01F 25/10;**
**G01F 25/13; G01N 29/221; G01N 29/222;**
**G01N 29/2462;** G01F 1/74; G01F 15/003;
G01F 15/024; G01N 2291/0423

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.11.2024 FR 2412647**

(71) Applicants:
• **Bürkert Werke GmbH & Co. KG**
  **74653 Ingelfingen (DE)**
• **Burkert**
  **67220 Triembach-au-Val (FR)**

(72) Inventors:
• **FUCHS, Yannick**
  **67220 Triembach-au-Val (FR)**
• **WEBER, Sylvain**
  **67220 Triembach-au-Val (FR)**

(74) Representative: **Prinz & Partner mbB**
**Patent- und Rechtsanwälte**
**Rundfunkplatz 2**
**80335 München (DE)**

(54) **FLUID MEASURING DEVICE AND METHOD FOR DETERMINING A FLOW RATE THROUGH A FLUID MEASURING DEVICE**

(57)    A fluid measuring device (10) has two waveguides (22, 24) on a flow channel (12) and a first and a second signal converter element (26, 28) mounted to the waveguides (22, 24). The signal converter elements (26, 28) each comprise at least two signal converters (30, 32, 34, 36, 38, 40) for exciting surface acoustic waves in the waveguides (22, 24) that are arranged beside each other in a transverse direction (T) of the flow channel (12). To determining a flow rate through the flow channel (12) center signal data is measured with the center signal converters (30, 32) and side signal data is measured with the side signal converters (34, 36, 38, 40) of the first and second signal converter element (26, 28). From the measured center and side signal data, a correction coefficient is determined and a flow rate is determined from the measured center and side signal data and the determined correction coefficient.

Fig. 1

## Description

The invention relates to a fluid measuring device and a method for determining a flow rate of a fluid through a fluid measuring device.

In many fluid-carrying systems, it is necessary to determine a flow rate of the fluid. For this purpose, a fluid measuring device is inserted into one of the fluid lines of the system, i.e., a device by which a flow rate of a fluid flowing through a measuring tube or flow channel can be measured.

A measuring method that is suitable for this task is the use of surface acoustic waves (SAW). A transmitting ultrasound signal converter excites surface acoustic waves in an acoustic waveguide, which are partially decoupled into the fluid, travelling through the fluid as bulk acoustic waves, and from there are partially coupled again into the same or another waveguide where they continue to travel as surface acoustic waves to a receiving ultrasound signal converter mounted on the respective waveguide. The receiving signal converter obtains a characteristic signal. The temporal intensity curve of this signal, including the time delay compared to the signal emitted by the transmitting signal converter, allows conclusions to be drawn about characteristic properties of the fluid, such as flow velocity, flow rate, flow volume, density, velocity of sound, temperature, homogeneity, composition of a multi-phase flow or concentration or viscosity.

This measuring method is particularly suitable for liquids, but also for highly viscous, dough-like, gel-like or pasty fluids of homogeneous or inhomogeneous nature, including biological samples.

The spatial propagation of the bulk sound waves in the fluid is achieved, for example, by decoupling the bulk sound waves into the fluid at an angle $\delta$ relative to a surface normal of the waveguide. For a stagnant fluid, the relationship can be described by the following formula:

$$\delta = \arcsin\left(\frac{c_M}{c_S}\right),$$

where $c_M$ is the sound velocity of the bulk sound waves within the fluid and $c_S$ is the sound velocity of the surface acoustic waves propagating along the waveguide.

In known devices, transmitting and receiving signal converters are mounted on a side of the respective waveguide opposite the interface with the fluid. In order to be able to couple surface sound waves into the fluid, Lamb waves are preferably excited, i.e., waves with a wavelength that is considerably longer than the thickness of the waveguide between the signal converter and the fluid. In this case, the acoustic surface waves oscillate on both the top side and the bottom side of the waveguide, and the oscillations also includes a longitudinal component. Therefore, this type of excitation is suitable for decoupling bulk sound waves into the fluid. It is also possible to select the wavelength of the excited surface acoustic waves in the order of the thickness of the waveguide, which leads to surface acoustic waves in a transition area between Lamb waves and Rayleigh waves. It would also be conceivable to use Rayleigh waves or Leaky-Rayleigh waves. The decoupled acoustic bulk waves are optionally reflected once or several times on an inner side of the measuring tube. The fluid is in direct contact with the waveguide for this measuring method.

Depending on the current flow mode in the flow channel, fluid will flow either in a laminar flow or in a turbulent flow. In the laminar flow mode, the velocity of the fluid is slower at the borders of the flow channel defined by the sidewalls of the measuring tube and faster in the middle of the flow channel. In the turbulent flow mode, fluid velocities are almost equal over the complete cross-section of the flow channel. Conventional flow rate measurements, therefore, are characteristically more accurate in a turbulent flow mode with higher flow velocities.

It is an object of the invention to increase the accuracy of a fluid measuring device.

This object is achieved by a fluid measuring device having a measuring tube, in which a circumferentially closed flow channel for a fluid to be measured is formed, the flow channel having a polygonal cross section with several flat side faces arranged at an angle to each other. At least one waveguide for surface acoustic waves is formed on one of the side faces of the measuring tube, and at least a first and a second signal converter element that are each fixedly mounted to the at least one waveguide at a predetermined distance from each other along a longitudinal direction of the flow channel. The first and second signal converter elements each comprise at least two signal converters that are arranged beside each other in a transverse direction of the flow channel, each signal converter being controllable separately and each signal converter being designed to excite surface acoustic waves in the respective waveguide and/or to receive surface acoustic waves from the waveguide, wherein the signal converter is adapted to emit and/or receive surface acoustic waves and the respective waveguide is adapted to decouple surface acoustic waves from the waveguide as bulk acoustic waves that propagate through the fluid in the flow channel and/or to couple bulk acoustic waves into the waveguide as surface acoustic waves. The at least two signal converters of each signal converter element form one center signal converter and at least one side signal converter, the center signal converter being arranged in the center of the respective side face with regard to the transverse direction and lying in a center plane parallel to the longitudinal direction and perpendicular to the side face, the side signal converters of the first and second signal converter element being arranged sidewardly of the respective center signal converter with regard to the transverse direction so that one side signal converter of the first signal converter element and one side signal converter of the second signal converter element lie in a side plane parallel to the longitudinal direction and parallel to the center plane.

Measuring signal data from the center signal converter and from the side signal converters allows determining space-resolved data with regard to the transverse direction of the flow channel, thereby allowing a distinction between different flow modes. From this data, e.g. a correction coefficient can be determined that can be used to modify a determined flow rate and thereby to increase the accuracy of the measurement.

All signal converter elements may be arranged on the outside of the flow channel and the waveguides may be integral parts of the side faces of the flow channel, keeping the flow channel free from any structures. Therefore, the fluid measuring device is compact and robust and can be used for many kinds of fluids.

The center signal converters of both the first and the second signal converter element form a pair of center signal converters and lie in the center plane that is perpendicular to the transverse direction and may include a centerline of the flow channel. Therefore, center signal data measured between the two center signal converters relates to the flow velocity of the fluid in the center of the flow channel.

The side signal converters of both the first and the second signal converter elements that are arranged on the same side of the respective center signal converter form a pair of side signal converters. In other words, the two side signal converters of the pair are positioned adjacent to the same side face of the flow channel. The pair of side signal converters lies in the side plane parallel to the center plane. Side signal data is measured between this pair of side signal converters.

The respective side plane is usually parallel to the side face of the flow channel adjacent to the side signal converters in the respective side plane.

In a square or rectangular cross-section flow channel, the waveguides extend in transverse direction perpendicular to the side plane in which the pair of side signal converters is arranged and also perpendicular to the center plane in which the pair of central signal converters are arranged.

Generally, only measurement paths are considered that run in the respective center or side plane containing the respective pair of center or side signal converters presently active. As a measurement path always lies in either the center plane or one of the side planes, a spatial correlation of transmitting and receiving signal converter with regard to the transverse direction is always unambiguous.

Usually, each of the signal converters is electively operable by a control unit as a transmitter and as a receiver. Therefore, each of the signal converters can, depending on its current operating mode, operate as a transmitting signal converter and excite acoustic surface waves in the waveguide and operate as a receiving signal converter and receive acoustic surface waves from the waveguide and generate a measurement signal in form of signal data.

The control unit may also control the points in time for operating each of the signal converters to excite acoustic surface waves and receive acoustic surface waves.

It is of course possible to arrange waveguides on more than two side faces of the flow channel and to provide them with additional signal converter elements. This way, it may e.g. be determined, if the measurement tube is completely filled with fluid or not, or measurements in an inhomogeneous fluid can be performed with higher accuracy.

According to one aspect, the at least one waveguide contains a first and a second waveguide that are formed on two opposite side faces of the measuring tube, and the first signal converter element is arranged on the first waveguide and the second signal converter element is arranged on the second waveguide.

Optionally, the flow channel has a square or rectangular cross-section.

To provide a reference signal, a third signal converter element having at least a center signal converter may be provided on the first waveguide at a predetermined distance from the first signal converter element along the longitudinal direction of the flow channel. This arrangement allows for the detection of a propagation time of the surface acoustic waves between the first and the third signal converter elements. It may be sufficient for the third signal converter element to have only a center signal converter and no side signal converters.

Optionally, a temperature sensor is provided on the outside of the measurement tube to further improve the measurement accuracy.

According to one aspect, the first and second signal converter element each comprise one center signal converter and two side signal converters. The side signal converters are arranged at opposite sides of the center signal converter in the transverse direction. The side signal converters of the first signal converter element and the side signal converters of the second signal converter element form two pairs of side signal converters, the pairs of side signal converters lying in two side planes that are parallel to each other and perpendicular to the transverse direction. Only measurement paths are regarded running in a plane perpendicular to the transverse direction containing the respective pair of center or side signal converters currently acting as transmitter and as receiver.

In this example, the center signal converters of the first and second signal converter element form a pair of center signal converters, utilized to generate the center signal data, and the left and right side signal converters, respectively, of the first and second signal converter element form a first and second pair of side signal converters, utilized to generate side signal data.

The center signal converters may have a greater extension than the side signal converters in transverse direction to ensure that the side signal converters measure the flow velocity near the side faces of the measurement tube. For instance, each signal converter element may have four signal converter components with equal lateral extension. The two middle signal converter components of each of the signal converter elements are grouped and form one singular center signal converter having double the width of each of the side signal converters.

The waveguides may extend over a complete width of the flow channel in transverse direction so that the side signal converters can be arranged as near to the side face of the flow channel as technically possible to increase the measurement accuracy.

It is also possible to use signal converter elements with more than three signal converters to further increase lateral spatial resolution.

The above object is also achieved with a method for determining a flow rate through a flow channel of a fluid measuring device described above, with the steps:

- measuring center signal data with the center signal converters and side signal data with the side signal converters of the first and second signal converter elements,

- determining a correction coefficient from the measured center and side signal data, and

- determining a flow rate from the measured center and side signal data and the determined correction coefficient.

Generally, all signal data are based on propagation time signals of SAWs between each pair of signal converters. The signal data are dependent from and proportional to a flow velocity of the fluid in the flow channel in the respective center or side plane in the flow channel on which the signal converters are positioned. Center and side signal data provide space-resolved flow velocities in the transverse direction of the flow channel.

The step of determining the correction coefficient may comprise forming a ratio from the center signal data and the side signal data. This ratio contains information on the current flow mode. A ratio of center to side signal data of about 1 indicates a turbulent flow mode, while a ratio of center to side signal data >1 indicates a laminar flow mode. A correction coefficient may easily be determined based on predetermined ratios for laminar and turbulent flow modes. Such predetermined ratios can e.g. be provided for flow velocities for different kinds of fluids, including mixed fluids, e.g. dispersion of water and oil, temperatures, viscosities, inhomogeneous fluids etc..

In one aspect, the correction coefficient is provided in form of a mathematical function, e.g. in dependency from the ratio of center and side signal data.

The correction coefficient may be determined analytically, empirically and/or by a suitable simulation. Of course, machine learning techniques and artificial intelligence techniques are also applicable to determine the correction coefficient. These techniques may also be applied to learn a behavior of laminar and turbulent flow modes for different fluids and to generate correction coefficients for these fluids.

In a possible simple calculation model, only a distinction between a laminar and a turbulent flow mode is made and, when a laminar flow mode is detected, a suitable predetermined correction coefficient is determined and applied to calculate the flow rate.

In a possible more advanced calculation model, the correction coefficient is determined based on the actual flow profile in the flow channel and in dependency of on the measured center and side signal data. For instance, the correction coefficient may be determined in dependency of the ratio between the center and side signal data.

All correction coefficients determined beforehand may be stored in the memory of the control unit. To determine the correction coefficient, a correction coefficient fitting to the determined ratio of center and side signal data is provided by the control unit based on the stored correction coefficient data.

Also, as it is known that the side signal converters may have a general aberration due to proximity to the walls of the flow channel, the correction coefficient may also be used to compensate this aberration.

The step of measuring the center signal data and the side signal data may comprise a first measurement step at a first point in time, where only the center signal converters are active and the center signal data are measured, and a second measurement step at a second point in time, where only the side signal converters are active and the side signal data is measured. Therefore, at the first point in time, only the center signal converters are active and operating as transmitter and receiver, and the center signal data are measured. At the second point in time, the side signal data are measured. Optionally, only one pair of side signal converters is active and operating as transmitter and receiver at the second point in time.

When the fluid measuring device has a second pair of side signal converters, the side signal data thereof are optionally measured at a separate third point in time so that the side signal data do not contain any acoustic waves crossing over from one pair of side signal converters to the other in the transverse direction.

There should be no overlap in time of the first and second (and optionally third) measurement step.

Measurements are optionally performed with and against the flow direction of the fluid. This is easily achieved by either operating the signal converters of the first signal converter element or those of the second signal converter element as transmitter and the respective other signal converters as receiver and vice versa.

To increase the accuracy of the measurement, a reference signal may be measured e.g. between the center signal converter of the first signal converter element and a third signal converter arranged on the first waveguide.

In an optional variant, further signal converter elements are placed on side faces of the flow channel that extend along the vertical direction (in the mounting position of the fluid measuring device) to gain information on the filling level of the fluid in the flow channel.

It is possible to provide a display where center and side signal data are displayed, e.g. in form of a flow profile over the width of the flow channel.

In the context of this application, only bulk acoustic waves are considered which are decoupled into the fluid in the immediate area of the respective transmitting signal converter. Although it is conceivable that the bulk acoustic waves propagate in the axial direction beyond the waveguides, so that coupling points occur outside the waveguide and outside the axial area between the transmitting and receiving signal converters, such coupling points are not considered in the context of this application, as they do not contribute to the measurement and are thus negligible.

In the following, a preferred embodiment of the invention is described with regard to the enclosed drawings.

- Figure 1 shows a schematic perspective view of a fluid measuring device according to the invention;

- Figure 2 shows measurement paths in the fluid measuring device of Figure 1;

- Figures 3 and 4 show schematic flow profiles for a laminar flow mode and a turbulent flow mode in the flow channel of the fluid measuring device of Figure 1;

- Figure 5 shows a schematic view of the center and side signal data measured by the signal converter elements of the fluid measuring device of Figure 1;

- Figures 6 and 7 show the measuring of the center and side signal data at different points in time; and

- Figure 8 shows the dependency of the correction coefficient on the ratio of the measured center and side signal data.

For reasons of clarity, identical components are not always provided with reference signs.

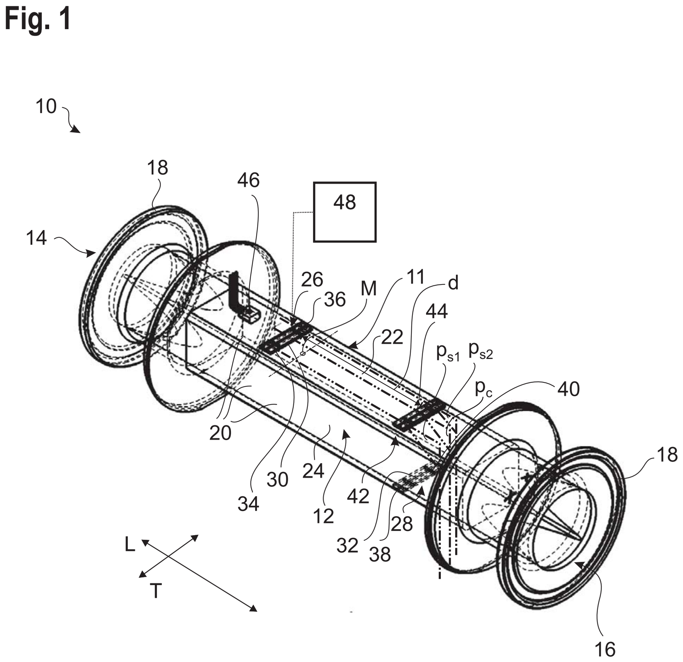

Figure 1 shows a fluid measuring device 10, which is designed to measure a flow rate of a fluid flowing therethrough and/or other properties of the respective fluid.

The fluid measuring device 10 has a measuring tube 11 in which a tubular flow channel 12 is formed. The flow channel 12 is circumferentially closed along its entire longitudinal extension. The flow channel 12 extends straight along a longitudinal direction L from a fluid inlet 14 to a fluid outlet 16.

At the fluid inlet 14 and the fluid outlet 16, connection flanges 18 are provided to connect the fluid measuring device 10 to adjacent tubes of a fluid system (not shown).

The fluid measuring device 10 has only one single flow channel 12. Usually, the fluid inlet 14 and the fluid outlet 16 are interchangeable in their function, so that fluid can flow through the flow channel 12 in both directions.

The flow channel 12 has a polygonal cross-section. In the shown variant, the cross-section is square and has four side faces 20 arranged at a 90° angle. However, the cross-section could also be rectangular or even hexagonal or octagonal. The cross section of the flow channel 12 is here constant over its length.

In the example shown, two opposing side faces 20 comprise a first and a second waveguide 22, 24 for acoustic surface waves (SAW). Each of the waveguides 22, 24 may extend over the complete with w along the transverse direction T perpendicular to the longitudinal direction L (as far as technically possible).

All waveguides 22, 24 are integrally formed with their respective side face 20 of the flow channel 12 in this example.

A first signal converter element 26 is arranged on the first waveguide 22, while a second signal converter element 28 is arranged on the second waveguide 24. Each signal converter element 26, 28 has at least two signal converters, in this example one center signal converter 30, 32 and two side signal converters 34, 36, 38, 40.

All signal converters 30, 32, 34, 36, 30, 40 are in direct contact with the respective waveguide 22, 24, but not in direct contact with the fluid inside the flow channel 12 and do not extend into the cross section of the flow channel 12. The side faces 20 are uninterrupted along the complete flow channel 12.

The wall thickness of the waveguides 22, 24 is selected such that a coupling of impinging bulk acoustic waves into the respective waveguide 22, 24 takes place and the resulting surface acoustic waves propagate along the waveguide 24, 24 to the respective receiving signal converter 30, 32, 34, 36, 38, 40. For instance, the wall thickness of the measuring tube 11 is reduced in the waveguides 22, 24 compared to the wall thickness of the measuring tube 11 outside the waveguides 22, 24. The wall thickness of the measuring tube 11 outside the waveguides 22, 24 is here chosen so large that there is essentially a reflection of the bulk acoustic waves and only a negligible decoupling of surface acoustic waves.

Each signal converter 30, 32, 34, 36, 38, 40 is in this example an ultrasound transducer that can operate as a transmitter as well as a receiver. All signal converters 30, 32, 34, 36, 38, 40 are able to operate independently of each other.

In both signal converter elements 26, 28, the two side signal converters 34, 36, 38, 40 are arranged directly adjacent to the center signal converter 30, 32 on both sides of the center signal converter 30, 32 along the transverse direction T.

The first and the second signal converter elements 26, 28 are positioned at a predetermined distance d from each other along the longitudinal direction L (see Fig. 1).

The center signal converters 30, 32 form a pair of center signal converters.

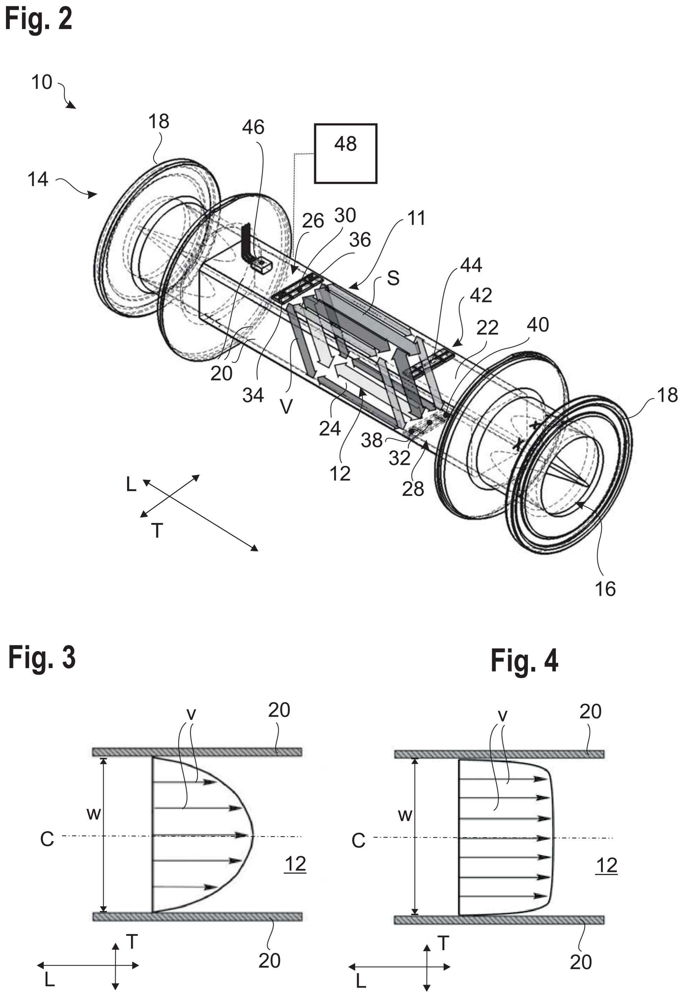

Both center signal converters 30, 32 extend symmetrically to a center M of the respective side face 20 with regard to the transverse direction T (see Fig. 1). Therefore, both center signal converters 30, 32 lie on a center plane $p_c$ that extends parallel to the longitudinal direction L and perpendicular to the respective side face 20 on which the center signal converters 30, 32 are arranged. The center plane $p_c$ extends parallel to the longitudinal direction L and contains an imaginary center line C of the flow channel 12 that runs along the longitudinal direction L in the center of gravity of the cross section of the flow channel 12 (indicated in Figs. 3 and 4).

The side signal converters 34, 38 and 36, 40 adjacent to the respective same side face 20 of the flow channel 12 form a first pair of side signal converters 34, 38 and a second pair of side signal converters 36, 40.

The first pair of side signal converters 34, 38 lies on a side plane $p_{s1}$ and the second pair of side signal converters 36, 40 lies on a side plane $p_{s2}$. The side planes $p_{s1}$, $p_{s2}$ extend parallel to the center plane $p_c$ on both sides thereof (indicated in Fig. 1).

In a flow channel 12 with a square or rectangular cross section as is shown here, all planes $p_c$, $p_{s1}$, $p_{s2}$ extend parallel to the side faces 20 adjacent to the waveguides 22, 24 and, as a consequence, also perpendicular to the side faces 20 carrying the waveguides 22, 24.

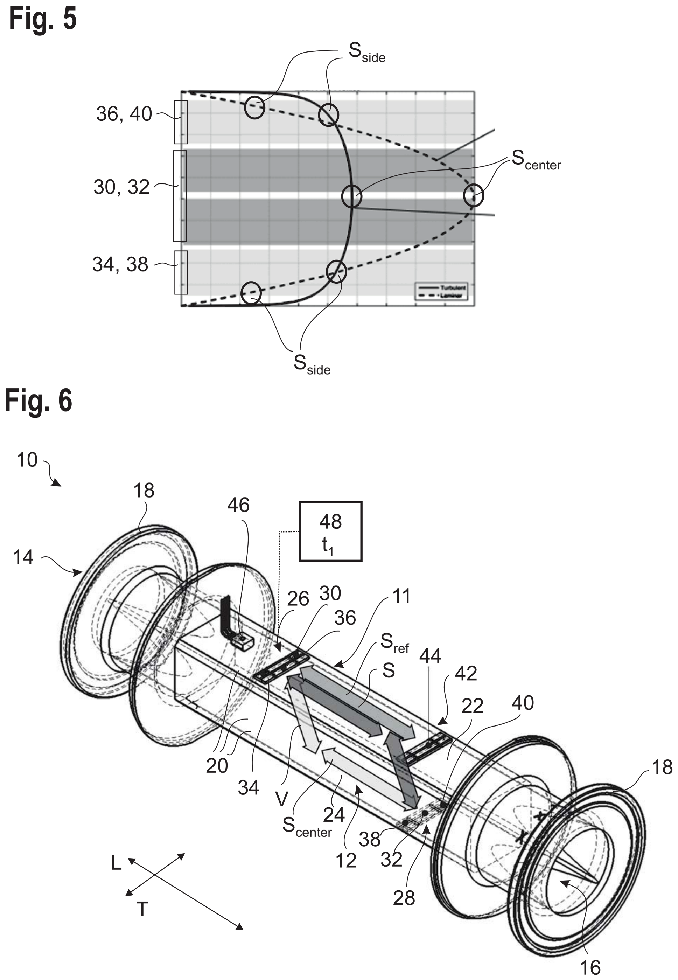

In this example, a third signal converter element 42 is arranged on the first waveguide 22 at the same distance d than the second signal converter element 26 on the second waveguide 24. The third signal converter element 42 has only a center signal converter 44 in this example, lying on the center plane $p_c$. The third signal converter element 42 serves to generate a reference signal $S_{ref}$ (schematically indicated in Fig. 6).

Further, a temperature sensor 46 is arranged on flow channel 12, in this example on the first waveguide 22.

All signal converters 30, 32, 34, 36, 38, 40, 44 and the temperature sensor 46 are electronically connected to a control unit 48. The control unit 48 is configured to address all signal converters 30, 32, 34, 36, 38, 40, 44 individually and to operate them either as a transmitter or as a receiver according to the desired function at a given point in time. Also, the control unit 48 is configured to receive signal data $S_{center}$, $S_{side}$, $S_{ref}$ from all of the signal converters 30, 32, 34, 36, 38, 40, 44 and from the temperature sensor 46.

Here, all signal converters 30, 32, 34, 36, 38, 40, 44 are e.g. identically constructed and are piezo transducers in the form of an interdigital converter, which directly contacts the respective waveguide 22, 24. When operating as a transmitter, the respective signal converter 30, 32, 34, 36, 38, 40, 44 excites surface acoustic waves (SAW) in the respective waveguide 22, 24 to which it is mounted. The surface acoustic waves S are generated by applying an alternating voltage to the respective signal converter 30, 32, 34, 36, 38, 40, 44. When operating as a receiver, the respective signal converter 30, 32, 34, 36, 38, 40, 44 receives surface acoustic waves S from the waveguide 22, 24 and converts them into electrical signals corresponding to the signal data $S_{center}$, $S_{side}$, $S_{ref}$.

The fluid flowing through the flow channel 12 is in direct contact with the side faces 20 of the flow channel 12. In this example, the fluid fills the flow channel 12 completely.

Each of the signal converter elements 26, 28 has in this example four individual signal converter components. Each of the outer signal converter components forms one of the side signal converters 34, 36 on the first signal converter element 26 and side signal converters 38, 40 on the second signal converter element 28, respectively. However, the two inner signal converter components are connected with each other and together form the center signal converter 30 on the first signal converter element 26 and the center signal converter 32 on the second signal converter element 28, respectively. As is indicated in Fig. 5, each of the center signal converters 30, 32 extends farther along the transverse direction T than each of the side signal converters 34, 36, 38, 40.

The surface acoustic waves S generated by the signal converters 30, 32, 34, 36, 38, 40, 44 are therefore partially decoupled from the respective waveguide 22, 24 into the fluid as bulk acoustic waves V upon contact with the fluid and, conversely, partially again coupled into the waveguides 22, 24 as surface acoustic waves S (see Fig. 2). Reflections inside the flow channel 12 may occur, however, in this example the dimensions of the flow channel 12 is chosen so that only acoustic waves are detected by the respective signal converter 30, 32, 34, 36, 38, 40, 44 acting as receiver that are not reflected back through the flow channel 12.

Figure 2 shows the possible measurement paths that the acoustic waves S, V take through the flow channel 12. Only measurement paths within a single plane, either the center plane $p_c$ or one of the side planes $p_{s1}$, $p_{s2}$ are taking into account. To achieve this, only the signal converters of a single pair of signal converters 30, 32, 34, 38, 36, 40 are ever in operation at a single point in time. One of each pair of signal converters operates as transmitter and the other as receiver.

After measurement, operation can be switched over so that the measurement path is measured in the opposite direction. In this way, signal data $S_{center}$, $S_{side}$, $S_{ref}$ can be measured for acoustic waves running with the flow direction and against the flow direction of the fluid in the flow channel 12.

Depending on the flow velocity v of the fluid and type of fluid in the flow channel 12, the current in the flow channel 12 is a laminar current or a turbulent current. Fig. 3 shows an example of a laminar flow mode, while Fig. 4 shows an example of a turbulent flow mode. In the laminar flow mode, the fluid flows slower in the vicinity of the side faces 20 then along the imaginary centerline C in the middle of the flow channel 12. The fluid velocity v, therefore, varies along the transverse direction T. In the turbulent flow mode, the fluid velocity v is approximately equal over the complete cross-section of flow channel 12.

As the side signal converters 34, 36, 38, 40 are arranged near to their respective side face 20 and the center signal converter 30, 32 are arranged in the center M of the respective signal converter element 26, 28, the signal data $S_{center}$, $S_{side}$ in the respective plane $p_c$, $p_{s1}$, $p_{s2}$ are indicative for a laminar or a turbulent flow mode (see Fig. 5). Therefore, a space-resolved flow profile over the width w of the flow channel 12 in transverse direction T can be determined. This is indicated in Fig. 5 by the dots indicating measured signal data $S_{center}$, $S_{side}$ for the side signal converters 34, 36, 38, 40 and the center signal converters 30, 32 on the respective curves for a laminar (dashed line) and a turbulent flow mode (solid line).

In the example shown here, the side signal data $S_{side}$ from both pairs of side signal converters 34, 36, 38, 40 in both side planes $p_{s1}$, $p_{s2}$ are averaged so that only one single value for the side signal data $S_{side}$ is determined.

A ratio of the center signal data $S_{center}$ and side signal data $S_{side}$ is indicative for the flow mode of the fluid and flow channel 12. A ratio $S_{center}/S_{side}$ >1 indicates a laminar flow mode, while a ratio $S_{center}/S_{side}$ equal to or approximately 1 indicates a turbulent flow mode.

The center signal data $S_{center}$ is collected at a first measuring step at a first point in time $t_1$. At this point in time $t_1$, only the center signal converters 30, 32 in the center plane $p_c$ are active (see Fig. 6). The control unit 48 operates one of the center signal converters 30, 32 as a transmitter and the other as a receiver. The receiving center signal converter 30, 32 measures the center signal data $S_{center}$ and transmits the data to the control unit 48. Optionally, the role of transmitter and receiver is switched, with the other center signal converter 30, 32 being operated as a receiver and a transmitter, respectively. Center signal data $S_{center}$ is determined with the flow direction and/or against the flow direction of the flow in the flow channel 12.

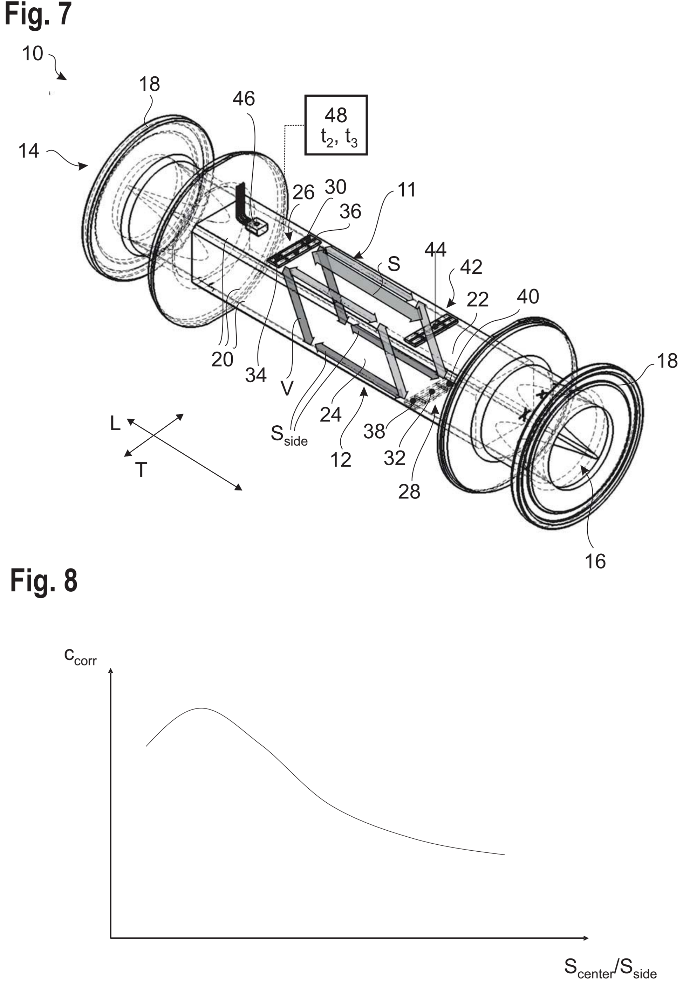

The side signal data $S_{side}$ is analogously collected at a second measuring step at a second point in time $t_2$, when only the side signal converters 34, 38 in side plane $p_{s1}$ are active (see Fig. 7), and at a separate point in time $t_3$, when only the side signal converters 38, 40 in side plane $p_{s2}$ are active (also indicated in Fig. 7). For each pair of side signal converters 34, 38, 36, 40, the side signal data $S_{side}$ is here collected separately. The resulting side signal data $S_{side}$ may be the average of both measurements.

The measurements of the center signal data $S_{center}$ and the side signal data $S_{side}$ do not overlap in time in this example.

The reference signal $S_{ref}$ is optionally measured at the same point in time $t_1$ as the center signal data $S_{center}$ between the center signal converter 30 of the first signal converter element 26 and the center signal converter 44 of the third signal converter element 42 operating as receiver. This reference signal $S_{ref}$ is used e.g. calibrate the measurement with regard to the velocity of sound or other parameters of the fluid measuring device 10.

Also, a temperature signal is optionally measured by the temperature sensor 46, e.g. during one of the signal data measurements.

Fig. 8 shows a correlation of a correction coefficient $c_{corr}$ with the ratio of the center signal data $S_{center}$ and the side signal data $S_{side}$. This correlation is determined beforehand by measurements of different fluids with known fluid velocities v and flow rates, empirically, analytically, by simulation and/or using suitable machine learning are artificial intelligence techniques.

Correction coefficients $c_{corr}$ may be determined for different fluids, different flow channels, different temperatures and/or other parameters that influence the flow velocity v and flow mode of the fluid inside the flow channel 12.

During the flow rate measurement with the fluid measuring device 10, center signal data $S_{center}$ and side signal data $S_{side}$ are determined and collected as described above and the ratio from the center signal data $S_{center}$ and the side signal data $S_{side}$ is formed. Using the dependency of the correlation coefficient $c_{corr}$ from the ratio $S_{center}/S_{side}$, a current correction coefficient $c_{corr}$ is determined, and the flow rate measurement is corrected with the correction coefficient $c_{corr}$ so that the actual flow mode is taken into account and the accuracy of the flow rate measurement is increased.

**Claims**

1. A fluid measuring device (10) having a measuring tube (11), in which a circumferentially closed flow channel (12) for a fluid to be measured is formed, the flow channel (12) having a polygonal cross section with several flat side faces (20) arranged at an angle to each other, wherein at least one waveguide (22, 24) for surface acoustic waves (S) is formed on one of the side faces (20) of the measuring tube (11), and at least a first and a second signal converter element (26, 28) that are each fixedly mounted to the at least one waveguide (22, 24) at a predetermined distance (d) from each other along a longitudinal direction (L) of the flow channel (12),

   wherein the first and second signal converter elements (26, 28) each comprise at least two signal converters (30, 32, 34, 36, 38, 40) that are arranged beside each other in a transverse direction (T) of the flow channel (12), each signal converter (30, 32, 34, 36, 38, 40) being controllable separately and each signal converter (30, 32, 34, 36, 38, 40) being designed to excite surface acoustic waves (S) in the respective waveguide (22, 24) and/or to receive surface acoustic waves (S) from the waveguide (22, 24), wherein the signal converter (30, 32, 34, 36, 38, 40) is adapted to emit and/or receive surface acoustic waves (S) and the respective waveguide (22, 24) is adapted to decouple surface acoustic waves (S) from the waveguide (22, 24) as bulk acoustic waves (V) that propagate through the fluid in the flow channel (12) and/or to couple bulk acoustic waves (V) into the waveguide (22, 24) as surface acoustic waves (S), the at least two signal converters (30, 32, 34, 36, 38, 40) of each signal converter element (26, 28) forming one center signal converter (30, 32) and at least one side signal converter (34, 36, 38, 40), the center signal converters (30, 32) being arranged in the center (M) of the respective side face (20) with regard to the transverse direction (T) and lying in a center plane ($p_c$) parallel to the longitudinal direction (L) and perpendicular to the respective side face (20), the side signal converters (34, 36, 38, 40) of the first and second signal converter element (26, 28) being arranged sidewardly of the respective center signal converter (30, 32) with regard to the transverse direction (T) so that one side signal converter (34, 36) of the first signal converter element (26) and one side signal converter (38, 40) of the second signal converter element (28) lie in a side plane ($p_{s1}$, $p_{s2}$) parallel to the longitudinal direction (L) and parallel to the center plane ($p_c$).

2. The fluid measuring device (10) according to claim 1, wherein the at least one waveguide (22, 24) contains a first and a second waveguide (22, 24) that are formed on two opposite side faces (20) of the measuring tube (11) and the first signal converter element (26) is arranged on the first waveguide (22) and the second signal converter element (28) is arranged on the second waveguide (24).

3. The fluid measuring device (10) according to claim 2, wherein a third signal converter element (42) having at least a center signal converter (44) is provided on the first waveguide (22) at a predetermined distance (d) from the first signal converter element (26) along the longitudinal direction (L) of the flow channel (12).

4. The fluid measuring device (10) according to any of the preceding claims, wherein the respective side plane ($p_{s1}$, $p_{s2}$) is parallel to the side face (20) of the flow channel (12) adjacent to the side signal converters (34, 38, 36, 40) in the respective side plane ($p_{s1}$, $p_{s2}$).

5. The fluid measuring device (10) according to any of the preceding claims, wherein the first and second signal converter elements (26, 28) each comprise one center signal converter (30, 32) and two side signal converters (34, 36, 38, 40) and the side signal converters (34, 36, 38, 40) are arranged at opposite sides of the center signal converter (30, 32) in the transverse direction (T) and the side signal converters (34, 36) of the first signal converter element (26) and the side signal converters (38, 40) of the second signal converter element (28) form two pairs of side signal converters (34, 36, 38, 40), the pairs of side signal converters (34, 36, 38, 40) lying in two side planes ($p_{s1}$, $p_{s2}$) parallel to each other and perpendicular to the transverse direction (T).

6. The fluid measuring device (10) according to any of the preceding claims, wherein the center signal converters (30, 32) have a greater extension than the side signal converters (34, 36, 38, 40) in transverse direction (T).

7. The fluid measuring device (10) according to any of the preceding claims, wherein the waveguides (22, 24) extend over a complete width (w) of the flow channel (12) in transverse direction (T).

8. A method for determining a flow rate through a flow channel (12) of a fluid measuring device (10) according to any of the previous claims, with the steps:

    - measuring center signal data ($S_{center}$) with the center signal converters (30, 32) and side signal data ($S_{side}$) with the side signal converters (34, 36, 38, 40) of the first and second signal converter element (26, 28),
    - determining a correction coefficient ($c_{corr}$) from the measured center and side signal data ($S_{center}$, $S_{side}$), and
    - determining a flow rate from the measured center and side signal data ($S_{center}$, $S_{side}$) and the determined correction coefficient ($C_{corr}$).

9. The method according to claim 8, wherein the step of determining the correction coefficient ($c_{corr}$) comprises forming a ratio from the center signal data ($S_{center}$) and the side signal data ($S_{side}$).

10. The method according to claim 8 or claim 9, wherein the step of measuring the center signal data ($S_{center}$) and the side signal data ($S_{side}$) comprises a first measurement step at a first point in time ($t_1$), where only the center signal converters (30, 32) are active and the center signal data ($S_{center}$) are measured and a second measurement step at a second point in time ($t_2$), where only the side signal converters (34, 36, 38, 40) are active and the side signal data ($S_{side}$) is measured.

11. The method according to any of claims 8 to 10, wherein measurements are performed with and against a flow direction of the fluid.

12. The method according to any of claims 8 to 11, wherein a reference signal ($S_{ref}$) is measured between the center signal converter (30) of the first signal converter element (26) and a third signal converter (44) arranged on the first waveguide (22).

# Fig. 1

# Fig. 2

# Fig. 3

# Fig. 4

# Fig. 5

# Fig. 6

## Fig. 7

## Fig. 8

Europäisches
Patentamt
European
Patent Office
Office européen
des brevets

# EUROPEAN SEARCH REPORT

**Application Number**

EP 25 21 6929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/003593 A1 (MAYLE MICHAEL [DE] ET AL) 2 January 2020 (2020-01-02) * paragraphs [0049] - [0051], [0058] - [0060]; figures 1-9 * | 1-12 | INV. G01F1/66 G01F1/667 G01N29/22 G01N29/24 |
| A | DE 10 2011 119673 A1 (VOLKSWAGEN AG [DE]) 11 April 2013 (2013-04-11) * figures 1-6 * | 1-12 | G01F25/10 G01F1/74 G01F15/00 G01F15/02 |
| A | US 11 852 608 B2 (BUERKERT WERKE GMBH & CO KG [DE]; BURKERT S A S [FR]) 26 December 2023 (2023-12-26) * figures 9-15 * | 1-12 | |
| A | DE 10 2013 101950 A1 (UNIV DRESDEN TECH [DE]) 7 November 2013 (2013-11-07) * paragraph [0083]; figures 1-5 * | 1-12 | |
| A | US 3 575 050 A (LYNNWORTH LAWRENCE C) 13 April 1971 (1971-04-13) * figures 9,10 * | 1-12 | |
| | | | **TECHNICAL FIELDS SEARCHED (IPC)** |
| A | CN 1 344 914 A (HYDRO SONICK INTERNAT CO LTD [CA]) 17 April 2002 (2002-04-17) * claim 1; figures 2a,4,6b * | 1-12 | G01F G01N |

The present search report has been drawn up for all claims

| Place of search | Date of completion of the search | Examiner |
|---|---|---|
| The Hague | 19 March 2026 | Rambaud, Dilek |

EPO FORM 1503 03.82 (P04C01)

## ANNEX TO THE EUROPEAN SEARCH REPORT
## ON EUROPEAN PATENT APPLICATION NO.

EP 25 21 6929

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | | Publication date |
|---|---|---|---|---|
| US 2020003593 A1 | 02-01-2020 | CN | 110199179 A | 03-09-2019 |
| | | DE | 102017004038 A1 | 09-08-2018 |
| | | EP | 3577427 A1 | 11-12-2019 |
| | | US | 2020003593 A1 | 02-01-2020 |
| | | WO | 2018141469 A1 | 09-08-2018 |
| DE 102011119673 A1 | 11-04-2013 | NONE | | |
| US 11852608 B2 | 26-12-2023 | CN | 114660170 A | 24-06-2022 |
| | | DE | 102021133898 A1 | 23-06-2022 |
| | | FR | 3118178 A1 | 24-06-2022 |
| | | US | 2022196601 A1 | 23-06-2022 |
| DE 102013101950 A1 | 07-11-2013 | NONE | | |
| US 3575050 A | 13-04-1971 | DE | 1958235 A1 | 11-06-1970 |
| | | US | 3575050 A | 13-04-1971 |
| CN 1344914 A | 17-04-2002 | CA | 2329937 A1 | 15-03-2002 |
| | | CN | 1344914 A | 17-04-2002 |
| | | DE | 10105962 A1 | 04-04-2002 |
| | | KR | 20020021558 A | 21-03-2002 |
| | | US | 2002053243 A1 | 09-05-2002 |

EPO FORM P0459

For more details about this annex : see Official Journal of the European Patent Office, No. 12/82